# EUROPEAN PATENT APPLICATION

(11) **EP 1 855 195 A2**
(43) Date of publication of application: **14.11.2007**
(21) Application number: 07006828.3
(22) Date of filing: 02.04.2007
(51) Int. Cl.: G06F 9/44

(54) **Method of and system for data interaction in a web-based database application environment**

(30) Priority: 31.03.2006 US 787490 P
(71) Applicant: Trialstat Corporation, Ottawa ON K1N 7A2 (CA)
(72) Inventor: Wilson, David, Ontario K2B 5R4 (CA); O'Blenis, Peter, Ontario K4M 0Z7 (CA); Stefanison, Ian, Ontario K1S 2J7 (CA)
(74) Representative: Schaad, Balass, Menzl & Partner AG

(57) **Abstract**

The invention provides a method of data interaction on forms in a web-based database application environment comprising the steps of: invoking a software routine operable to: invoke Flash objects; receive form data from the web-based database application and transfer that form data to Flash objects; and receive Flash object data and transfer that data back to the web client for placement into the form. The invention also provides a system comprising: a personal computer operable to execute: a web client module; a Flash Object module; and a web client/Flash interface module; the web client module being operable to execute web pages and forms; and the web client/Flash interface module being operable to: receive initial form data from the web-based database application and transfer that data to Flash objects; and receive Flash object data and transfer that data back to the web-client for placement into the form.

## Description

### FIELD OF INVENTION

The present invention relates generally to computers and computer systems, and more specifically, to a method of and system for data interaction on forms, in a web-based database application environment.

### BACKGROUND OF THE INVENTION

Computer and telecommunications systems are almost pervasive in the industrialized world today. It is well known that data communication networks such as the Internet, Wide Area Networks (WANs) and Local Area Networks (LANs), offer tremendously efficient means of organizing and distributing computerized data. These efficiencies have resulted in their widespread use for both business and personal applications. For example, the Internet is now a common medium for collaborative research and data management, operating academic and public forums, distributing publications such as newspapers and magazines, and performing electronic commerce and electronic mail transactions.

An example of a software platform for providing such web services is AvantGo. AvantGo is a web-based database application that is provided by iAnywhere, a Sybase company. The AvantGo application consists of a central web server and a web client used for viewing HTML (hypertext markup language) pages that are provided by the central web server. HTML is a language commonly used to create documents on the World Wide Web, the HTML code defining the structure and layout of text and images on Web pages using a variety of tags and attributes.

The AvantGo web client can host Macromedia Flash content, but interaction with the data on the web forms of the client is not possible. Macromedia Flash is a vector-graphic based application that is commonly used to produce movies, animation and presentations in web environments. There is a desire to have the rich user interface of the Macromedia Flash environment along with the data interaction on web forms of the client, but AvantGo cannot support this.

There is therefore a need for a method of and system for interacting with data on web forms in a web-based database application environment.

### SUMMARY OF THE INVENTION

It is therefore an object of the invention to provide a method of and system for data interaction on forms in a web-based database application environment, which obviates or mitigates at least one of the disadvantages described above.

In an embodiment of the invention there is provided a method of data interaction on forms in a web-based database application environment, comprising the steps of:
invoking a software routine operable to: invoke Flash objects; receive initial form data from the web-based database application and transfer the form data to Flash objects; and
receive Flash object data and transfer the data back to the web-based database application for placement into the form.

In another embodiment of the invention there is provided a system for data interaction on forms in a web-based database application environment, comprising: a personal computer operable to execute: a web client module; a Flash Object module; and a web client/Flash interface module; the web client module being operable to execute web pages and forms; and the web client/Flash interface module being operable to: receive initial form data from the web-based database application and transfer the form data to Flash objects; and receive Flash object data and transfer the data back to the web-based database application for placement into the form.

This summary of the invention does not necessarily describe all features of the invention.

### BRIEF DESCRIPTION OF THE DRAWINGS

These and other features of the invention will become more apparent from the following description in which reference is made to the appended drawings wherein:

Figure 1 presents a block diagram of an exemplary embodiment of the invention; and

Figure 2 presents a flow chart of an exemplary embodiment of the invention.

### DETAILED DESCRIPTION

iAnywhere provides an SDK (software development kit) called the Portable Object Delivery System (PODS). This PODS is a library written in C that can be used to interact with the content on the HTML web forms hosted by the AvantGo web client.

Macromedia Flash is available on the Windows platform of operating systems as an ActiveX control. An ActiveX control is a software module that is similar to a Java applet in that a browser can download and execute it, the main difference being that the ActiveX control has full access to the operating system while Java does not. Also, ActiveX controls are limited to the Windows platform, while Java applets are platform independent.

This Flash ActiveX control has an existing communication mechanism that allows it to send messages to the window that is hosting it. This communication mechanism is called FSCommand. ActionScript, the scripting language used by Flash, can invoke FSCommands and pass string variables back to the application which is hosting it. The syntax of ActiveScript is much like that of JavaScript.

The invention includes a new extension for the AvantGo client browser that was created using the PODS SDK which hosts Flash content in its own window. This new extension generates and manages the window that is hosting the Flash ActiveX control. It is able to intercept FSCommands sent from the Flash content; it is also able to set variables that exist within the Flash content's ActionScript.

Using this extension as a bridge between the web form and Flash, content can be made using Flash to provide a richer interface to the end user. The web form can populate the content in Flash and, using the FSCommand communication mechanism, Flash is able to pass back data to the web form.

Heretofore, this type of communication between Flash and the AvantGo web browser was not possible as the web browser has no built in support for handling FSCommands sent by Flash through the normal JavaScript type of interface provided by HTML web pages. Only through the creation of the extension of the invention that hosts the Flash ActiveX control and the Flash content, can the communication between Flash and the AvantGo web browser occur successfully.

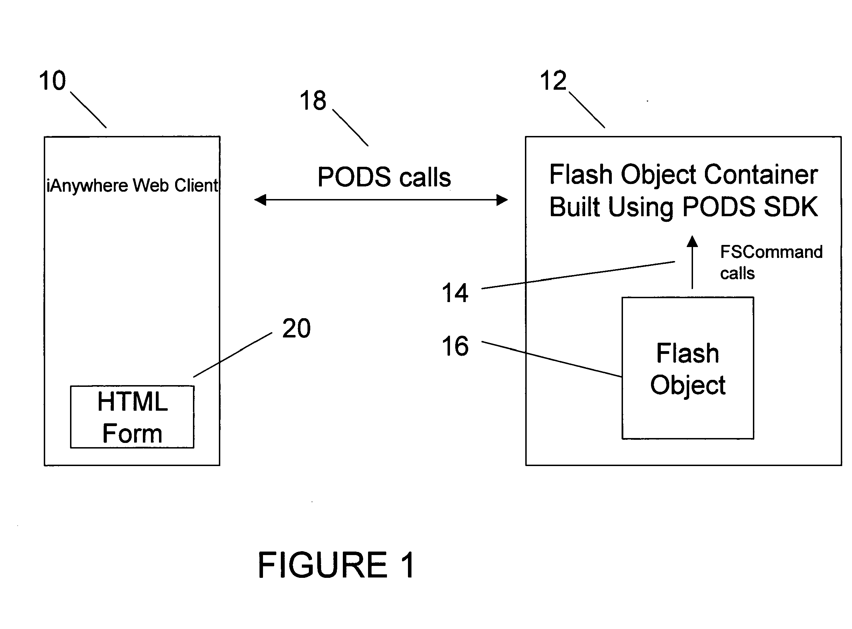

Figure 1 presents a block diagram of an exemplary implementation of the invention.

In this embodiment the invention is implemented using two independent software systems: the iAnywhere Web Client 10, and a TSFlashObjectContainer 12. As explained above, the iAnywhere Web Client 10 will allow the user to view HTML forms 20 on a local browser. The TSFlashObjectContainer 12 is the new extension that has been added to handle the FSCommands 14 from the Flash Object 16. The two modules communicate via PODS calls 18.

This arrangement requires the launching of two separate DLLs. A DLL (Dynamic Link Library) is a library of executable functions or data that is set up by a Windows application for its use. A DLL provides one or more particular functions and an application accesses the functions by creating either a static or dynamic link to the DLL (static links remain constant during program execution while dynamic links are created as needed).

Ideally, one DLL should have been sufficient to provide all of the required communication between Flash and the Web Client 10, however in this case a single DLL could not be used because of conflicts between the PODS SDK and the Microsoft ATL (Active Template Library) header files.

The DLL for the TSFlashContainer 12 hosts the Flash window and traps FSCommands 14, passing them to the form. It also triggers the TSFlashContainer DLL based on an event in the form. The DLLs may communicate with one another via function calls.

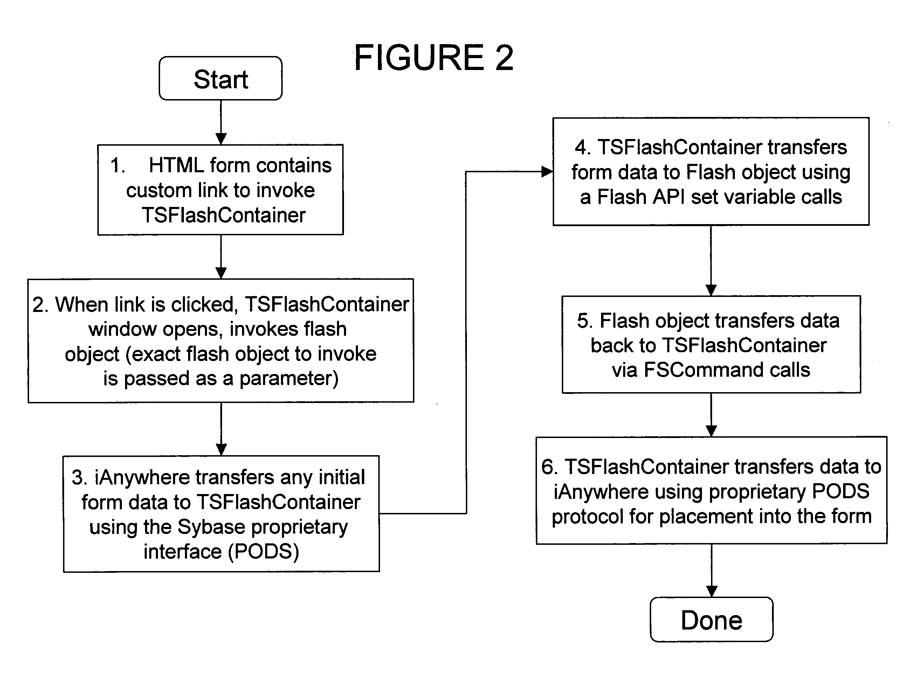

Figure 2 presents a flow chart of an exemplary way of implementing the invention.

The process begins when an HTML form is received which contains a custom link to invoke TSFlashContainer 12 (step1). When the custom link is clicked, the TSFlashContainer window opens, invoking a flash object (step 2). The exact flash object to invoke is passed as a parameter.

iAnywhere then transfers any initial form data to the TSFlashContainer 12 using the Sybase proprietary interface (PODS) at step 3. The TSFlashContainer 12 then transfers the form data to a Flash object using Flash API set variable calls (step 4).

The Flash object then transfers data back to the TSFlashContainer 12 using FSCommand calls 14 (step 5), and the TSFlashContainer 12 in turn transfers the data to the iAnywhere web client 10 using proprietary PODS protocol 18 for placement into the form (step 6).

### EXEMPLARY EMBODIMENT

As noted above, the exemplary implementation consists of two windows DLLs. Originally a single DLL solution was desired, but due to naming conflicts between the PODS sdk provided by Sybase and the windows ATL (active template library) this was abandoned. The first DLL, TrialStat_FlashCOM.dll, creates a window that can host the Flash ActiveX control, which is then used to render Flash SWF files. The second DLL, TrialStat_FlashPOD.dll, acts as a bridge between the FlashCOM dll and the AvantGO browser, using the Sybase PODS sdk. Details of these two DLLs follow.

The implementation of the TrialStat_FlashCOM DLL is straightforward. Using Microsoft Visual C++ version 7.1, the Flash.ocx file is imported (using the #import directive) to gain access to the internal ActiveX control. A new window class is then created using ATL to host this control. The basic construct is as follows: #import ".\MacroMediaFlash\Flash.ocx" rename_namespace("Flash") named_guids class TSFlashWindow :

```
       public CWindowImpl<TSFlashWindow, CAxWindow>,
       public IDispEventlmpl
       <
 
               1,
               TSFlashWindow,
               &_uuidof(Flash::_IShockwaveFlashEvents),
               &Flash::LIBID_Flash,
               /* wMajor = */ 1,
               /* wMinor = */ 0
 
       >
 
 {
 };
```

ATL provides a new window class that hosts the Flash ActiveX control and allows one to tap into the messages being sent between the host window and the control. The TSFlashWindow contains a straightforward Create() function where a new instance of the window is created and then a new instance of the Flash ActiveX control is created and attached to it. Some other simple functions were added to load a new SWF file, and set ActionScript variables that are contained within the running SWF file.

An important part of this is the event sink map that is added to the class to trap the FSCommand message produced by the control. The code may be implemented as follows: class TSFlashWindow

```
 {
 
   public:
      TVoid STDCALL OnFSCommand(BSTR strCommand, BSTR strArgs);
      BEGIN_SINK_MAP(TSFlashWindow)
      SINK_ENTRY_EX(1, uuidof(Flash::_IShockwaveFlashEvents), 0x96,
           OnFSCommand)
      END_SINK_MAP()
 };
```

This calls the TSFlashWindow::OnFSCommand() function whenever a new FSCommand message is generated in the playing SWF file. This is how the ActionScript writer on the Flash side can communicate with the window.

When an FSCommand is received, we want to pass the command along to the AvantGo browser. There is no built-in way to do this using regular JavaScript and html, which is why this method was used. To accomplish this an interface class was created called ITSFCReceiver: class ITSFCReceiver

```
 {
       public:
              virtual void OnFSCommand(const TCHAR* kszCommand,
              const TCHAR* kszArguments) = 0;
 };
```

It has one virtual function: OnFSCommand(). On the TrialStat_FlashCOM side of things, a user can register an instance of this class which is then used by the TSFlashWindow::OnFSCommand() to pass the command on to whomever owns the instance of the receiver. So the TSFlashWindow:: OnFSCommand() looks like this: void _stdcall TSFlashWindow::OnFSCommand(BSTR bstrCommand, BSTR bstrArgs)

```
 {
       USES_CONVERSION;
       // Convert the command and arguments to something we can use
       const TCHAR* kszCommand = OLE2T(bstrCommand);
       const TCHAR* kszArguments = OLE2T(bstrArgs);
       if (NULL != g_pReceiver)
               g_pReceiver->OnFSCommand(kszCommand, kszArguments);
 }
```

The "g_pReceiver" global variable is a pointer to an instance of the ITSFCReceiver class. When an FSCommand is received from the hosted ActiveX control, it passes it to the ITSFCReceiver::OnFSCommand() function of the receiver. The instance of the ITSFCReceiver class is registered with the DLL through a simple C function that is exported from the DLL.

This is how we get Flash FSCommands from Flash to the TriatStat_FtashPOD DLL.

The TrialStat_FlashPOD DLL handles the communication bridge between the TrialStat_FlashCOM DLL and the AvantGo Browser. Both parts will be described here in detail.

Regarding communicating with TrialStat_FlashCOM, as discussed on the FlashCOM side, an instance of ITSFCReceiver is created and registered with the TrialStat_FlashCOM.dll using an exported function from that DLL. This allows us to trap the FSCommands coming from the Flash ActiveX control. Also exported from TrialStat_FlashCOM.dll is a function that allows us to set ActionScript variables in the running SWF file. With this simple mechanism one can communicate back and forth between Flash and the browser.

To properly communicate with the AvantGo browser, Sybase provides an SDK which is called PODS (Portable Object Delivery System). Three basic objects were created to accomplish this communication: a PODSPod object, a PODSrc object and a PODObject object.

The first of these objects, the PODSPod object, is the most basic connection mechanism used to connect the DLL to the browser. A simple function exported by the DLL called PODSPodNew() is called and a new instance of a PODSPod object is created and returned. The AvantGo browser uses this function to register extensions with itself. The code could be implemented as follows: _declspec(dllexport) PODSPod*_cdecl PODSPodNew(PODSAvantGo* pAvantGo);

Once created, the purpose of the PODSPod object is to clean up any resources that were created by the extension/DLL. It also provides functions that return a description of what the extension is for and the version of the PODS SDK that was used to build it. When the extension is being unloaded, a Destroy() function of the PODSPod object will be called allowing it to clean up any resources that had been allocated.

The second of these objects, the PODSrc object, is also created when the AvantGo browser calls the PODSPodNew() function. It is registered with the PODS Object Manager which can be obtained from the PODSAvantGo object which is passed into the PODSPodNew() as a parameter.

The PODSrc object is used by the AvantGo browser to handle queries from JavaScript for supported PODObject objects. It acts as a mechanism to create new instances of PODObjects.

The PODSrc object that was created has three very simple functions: one to destroy an object it created previously, one to create a new PODSObject according to a specified name, and another function that simply creates the PODObject that it supports. All of the really important functionality is embedded in the PODObject.

The third of these objects, the PODObject object, is responsible for loading and initializing the TrialStat_FlashCOM DLL, creating the ITSFCReceiver instance and registering it with TrialStat_FlashCOM.dll and communicating with the AvantGo browser.

The TrialStat_FlashCOM.dll is loaded and initialized in the TSFlashPodObj constructor, which is the implementation of the PODObject. It also contains a series of functions that can be called directly from JavaScript using a name querying mechanism that is encapsulated in the PODSFlashPodObjGetMethod() function. TSFlashPodObj class supports seven functions that can be called from JavaScript:
1. Initialize(); Called when JavaScript wishes to open a new Flash SWF file.
2. IsFlashWindowOpen(); Called when it needs to be determined if the flash window is open or not.
3. GetCommand(); When a new FSCommand is received, this function can be called from JavaScript to obtain the command that was received.
4. GetCommandArgs(); When a new FSCommand is received, this function can be called from JavaScript to obtain the command arguments that were received.
5. SetFlashVariable(); Called when JavaScript wants to set an ActionScript variable in the currently running SWF file.
6. SetFSCommandSignalObject(); This function is invoked by JavaScript when it needs to set the ID of the HTML form input object that will be "clicked" when a new FS command is received from flash.
7. Shutdown(); This function is invoked by JavaScript when it wants to close the flash window.

A step-by-step listing of what happens and how the various pieces fit together would proceed as follows:
A) User starts the browser
B) The browser loads its extensions, in this case, the TrialStat_FlashPOD.dll
C) All of the PODS services are created, including the PODSObject (TSFlashPodObj) that is used to interact with the Flash content. During the construction of TSFlashPodObj, the TrialStat_FlashCom.dll is loaded and the instance of ITSFCReceiver is registered.
D) User loads a web page containing JavaScript that uses this extension
E) The web page requests that the extension load a new SWF file
F) The TSFlashPodObj::Initialize() is called with the name of the SWF file to open, and any additional startup ActionScript variables placed in a string.
G) TSFlashPodObj::Initialize() calls the Initialize() function exported by the TrialStat_FlashCOM.dll to open a new window to contain the running SWF file.
H) A new instance of TSFlashWindow is created which loads and displays the specified SWF file.
I) The user interacts with the SWF file. It is assumed here that the creator of the SWF file wrote some appropriate ActionScript to send FSCommands. Once the user triggers the FSCommand, the Flash ActiveX control sends that message to the TSFlashWindow instance that is hosting it.
J) TSFlashWindow::OnFSCommand() is called, which in turn calls the registered ITSFCReceiver object's OnFSCommand().
K) Back on the TrialStat_FlashPOD.dll side, the OnFSCommand() function is called which again passes it to TSFlashPodObj::OnFSCommand().
L) TSFlashPodObj::OnFSCommand() takes the command and its arguments, saves them in a storage area and then signals the input element that was registered by the JavaScript using the SetFSCommandSignalObject() function. This tells the JavaScript that a new FSCommand was received.
M) The JavaScript can now retrieve the command and arguments that were just received using the GetCommand() and GetCommandArgs() functions.

### CONCLUSIONS

All citations are hereby incorporated by reference.

The present invention has been described with regard to one or more embodiments. However, it will be apparent to persons skilled in the art that variations and modifications can be made without departing from the true scope and spirit of the invention.

The method steps of the invention may be embodiment in sets of executable machine code stored in a variety of formats such as object code or source code. Such code is described generically herein as programming code, or a computer program for simplification. Clearly, the executable machine code may be integrated with the code of other programs, implemented as subroutines, by external program calls or by other techniques as known in the art.

The embodiments of the invention may be executed by a computer processor or similar device programmed in the manner of method steps, or may be executed by an electronic system which is provided with means for executing these steps. Similarly, an electronic memory medium such computer diskettes, CD-Roms, Random Access Memory (RAM), Read Only Memory (ROM) or similar computer software storage media known in the art, may be programmed to execute such method steps. As well, electronic signals representing these method steps may also be transmitted via a communication network.

The invention could, for example, be applied to computers, smart terminals, personal digital assistants and Internet-ready telephones, in hard-wired or wireless environments. Again, such implementations would be clear to one skilled in the art, and do not take away from the invention.

## Claims

1. A method of data interaction on forms in a web-based database application environment, comprising the steps of:
invoking a software routine operable to:
invoke Flash objects;
receive initial form data from the web-based database application and transfer said form data to Flash objects; and
receive Flash object data and transfer said data back to the web-based database application for placement into the form.

2. A system for data interaction on forms in a web-based database application environment, comprising:
a personal computer operable to execute:
a web client module;
a Flash Object module; and
a web client/Flash interface module;
the web client module being operable to execute web pages and forms; and
the web client/Flash interface module being operable to:
receive initial form data from the web-based database application and transfer said form data to Flash objects; and
receive Flash object data and transfer said data back to the web-based database application for placement into the form.

3. A method of data interaction on forms in a web-based database application environment, comprising the steps of:
generating an HTML form including a custom link to invoke a TSFlashContainer;
responding to clicking on said custom link by opening a TSFlashContainer window and invoking a flash object, said flash object being passed as a parameter;
transferring any initial form data from the web-based database application to the TSFlashContainer;
transferring TSFlashContainer form data to a Flash object using Flash API set variable calls;
said Flash object transferring data back to the TSFlashContainer using FSCommand calls; and
said TSFlashContainer transferring said data to the web client for placement into the form.
